(19) Europäisches Patentamt
European Patent Office
Office européen des brevets

(11) Veröffentlichungsnummer: **0 036 583**
**B1**

# (12) EUROPÄISCHE PATENTSCHRIFT

(45) Veröffentlichungstag der Patentschrift: **18.07.84**

(51) Int. Cl.³: **C 07 F 9/09**, C 07 F 9/10, C 12 P 9/00

(21) Anmeldenummer: **81101863.9**

(22) Anmeldetag: **13.03.81**

## (54) Glycerin-3-phosphorsäurehalogenalkylester und Verfahren zu ihrer Herstellung und Weiterverarbeitung.

(30) Priorität: **26.03.80 DE 3011738**

(43) Veröffentlichungstag der Anmeldung:
**30.09.81 Patentblatt 81/39**

(45) Bekanntmachung des Hinweises auf die Patenterteilung:
**18.07.84 Patentblatt 84/29**

(84) Benannte Vertragsstaaten:
**AT BE CH DE FR GB IT LI NL SE**

(56) Entgegenhaltungen:
**DE - A - 2 033 357**

**CHEMICAL ABSTRACTS, Band 67, Nr. 6, 7. August 1967, Seite 2760, Nr. 29325d, Columbus, Ohio, U.S.A. V.I. SHVETS et al.: "Complex lipids. XXIV. Synthesis of optically active lecithins with the same and different acids"**
**CHEMICAL ABSTRACTS, Formula Index, 8th Coll. Index, Bander 66-75, Formulas C23-C33, American Chemical Society, page 9111F**
**JUSTUS LIEBIGS ANNALEN DER CHEMIE, Band 709, 1967, Seiten 226-230, H. EIBL et al.: "Zur Synthese von alpha- und beta-Lecithinen und ihren Ätheranaloga"**
**CHEMICAL ABSTRACTS; Band 93, Nr. 17, 27. Oktober 1980, Seite 706, Nr. 168512n Columbus, Ohio, U.S.A. H.**

(73) Patentinhaber: **Max-Planck-Gesellschaft zur Förderung der Wissenschaften e.V., Bunsenstrasse 10, D-3400 Göttingen (DE)**

(72) Erfinder: **Eibl, Hansjörg, Dr., Steinweg 51, D-3406 Bovenden (DE)**

(74) Vertreter: **Weickmann, Heinrich, Dipl.-Ing., Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska Möhlstrasse 22, D-8000 München 86 (DE)**

(56) Entgegenhaltungen: (Fortsetzung)
**EIBL: "An efficient synthesis of mixed acid phospholipids using 1-palmitoyl-sn-glycerol-3-phosphoric acid bromoalkyl esters"**

EP 0 036 583 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue Glycerin-3-phosphorsäurehalogenalkylester als Zwischenprodukte zur Herstellung von Phospholipiden (Glycerinphosphatiden), ein Verfahren zu ihrer Herstellung und ein Verfahren zu ihrer Weiterverarbeitung.

Phospholipide besitzen wertvolle pharmakologische Eigenschaften. Aufgrund ihrer physikalischchemischen Eigenschaften (oberflächenaktive Wirkung) besitzen sie einen großen Einfluß auf die Permeabilitätsverhältnisse in Zellmembranen. Durch perorale oder intraperitoneale Verabreichung von Phospholipiden an Warmblüter lassen sich die Eigenschaften von Zellmembranen beeinflussen. Wegen ihrer oberflächenaktiven, micellierenden und emulgierenden Eigenschaften finden die Phospholipide als ernährungsphysiologisch unbedenkliche Substanzen weiters Verwendung in der Lebensmittelindustrie, als Futtermittelzusatz, und in der kosmetischen Industrie. Aufgrund ihrer Antioxydans-Wirkung werden sie auch als Hilfsmittel in der Leder- und Textilindustrie verwendet.

Die Isolierung einheitlicher Phospholipide aus natürlichen Geweben ist außerordentlich schwierig und kostspielig. Ihre Synthese ist vor allem dann problematisch, wenn Glycerinphosphatide hergestellt werden sollen, in denen die sn-Glycerin-3-phosphorsäure mit ganz bestimmten Fettsäureresten acyliert ist, und insbesondere zwei verschiedene Fettsäurereste enthält.

E. Cubero Robles et al. (Rec. Trav. Chim. 86, 1967, 762; Biochim. Biopphys. Acta 187, 1969, 520) beschreiben eine Synthese von Lecithinen (Phosphatidyl-choline) mit gemischten Fettsäureresten durch Acylierung von 1-Palmitoyl-sn-glycerin-3-phosphocholin und Fettsäureanhydriden in Gegenwart von $Na_2O$. Bei diesem Verfahren findet jedoch in hohem Maße ein Austausch der Acylgruppen statt, wodurch die Selektivität, d. h. ganz gezielte Einführung bestimmter Acylreste in bestimmter Stellung stark vermindert wird (vgl. K. M. W. Keough, P. J. Davis, Biochemistry 18, 1979, 1453). Ein weiterer Nachteil dieses Verfahrens ist, daß während der Acylierungsstufe in erheblichem Maße auch eine Wanderung des Phosphorsäurerestes aus der 3- in die 2-Stellung erfolgt. Die Acylierung ist außerdem nur nach vorhergehender Einführung von Aminoschutzgruppen und mit einem großen Überschuß an Säureanhydrid durchführbar, wodurch das Verfahren weiter kompliziert und, insbesondere bei der Verwendung teurer Fettsäuren, kostspielig wird. V. I. Shrets et al. (Khimiya Prirodnykh Soedinenii, Vol. 2, No. 4, 1966, S. 225—229; Chemical Abstracts 67, Nr. 6, 1967, S. 2760, Nr. 29325 d) beschreiben die Acylierung des Bariumsalzes von Glycerin-3-phosphorsäurechloräthylester mit Linolen- und Ölsäurechloriden; auch diese Umsetzung verläuft nicht selektiv und führt zu einem Gemisch von Mono- und Diacylderivaten.

Aufgabe der vorliegenden Erfindung war es deshalb, einen Weg zur Herstellung von Glycerinphosphatiden bereitzustellen, der die aufgezeigten Nachteile vermeidet und es ermöglicht, Glycerinphosphatide mit ganz bestimmten Fettsäureresten, und insbesondere mit verschiedenen Fettsäureresten, stellungsspezifisch und mit hoher Selektivität auf einfache und wirtschaftliche Weise herzustellen.

Diese Aufgabe wird dadurch gelöst, daß man von neuen Glycerin-3-phosphorsäurehalogenalkylestern der allgemeinen Formel I ausgeht, die sich als wertvolle Zwischenprodukte zur Herstellung von Glycerinphosphatiden erwiesen haben.

Gegenstand der Erfindung sind deshalb Glycerin-3-phosphorsäurehalogenalkylester der allgemeinen Formel I

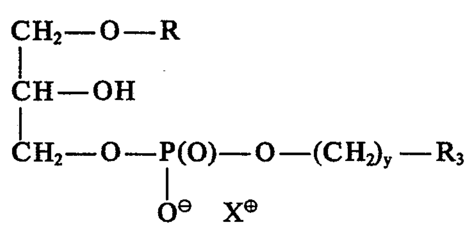

(I)

worin

R den Rest $R_1$ oder vorzugsweise einen Acylrest $-COR_1$ bedeutet,
$R_1$ eine geradkettige oder verzweigte, gesättigte Alkylgruppe mit 1 bis 25 C-Atomen bedeutet,
$R_3$ ein Halogenatom ist,
y eine ganze Zahl von 2 bis 12, vorzugsweise 2 bis 6 ist, und
$X^{\oplus}$ ein Äquivalent eines ein- oder zweiwertigen Kations bedeutet, und vorzugsweise ein Alkalimetallion ist.

Die Erfindung betrifft ebenfalls ein Verfahren zur Herstellung von Glycerin-3-phosphorsäurehalogenalkylestern der allgemeinen Formel I, das dadurch gekennzeichnet ist, daß man von einer Verbindung der Formel II ausgeht,

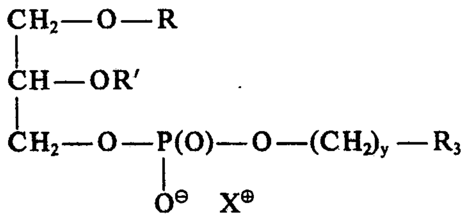

(II)

worin

R, $R_3$, y und $X^{\oplus}$ die gleiche Bedeutung wie in Formel I besitzen und
R′ einen Acylrest $-COR_2'$ oder den Benzylrest und
$R_2'$ eine geradkettige oder verzweigte, gesättigte oder ungesättigte Alkylgruppe mit 1 bis 25 C-Atomen bdeuten,

und a), wenn R′ einen Acylrest darstellt, diesen Acylrest in Gegenwart von Phospholipase $A_2$ hydrolysiert, oder b), wenn R′ den Benzylrest bedeutet, diesen durch katalytische Hydrogenolyse entfernt.

Ein weiterer Gegenstand der Erfindung ist ein Verfahren zur Weiterverarbeitung der erfindungsgemäßen Glycerin-3-phosphorsäurehalogenalkylester der Formel I zu Glycerin-3-phosphorsäurederivaten der allgemeinen Formel III. Das Verfahren zur Herstellung von Glycerin-3-phosphorsäurederivaten der Formel III

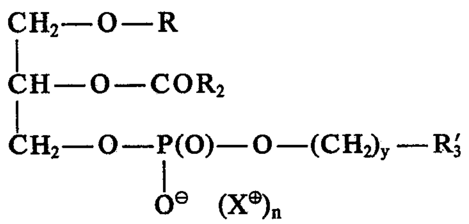

(III)

worin

R den Rest $R_1$ oder einen Acylrest $-COR_1$ bedeutet,
$R_1$ und $R_2$ gleich oder verschieden sind und $R_1$ eine geradkettige oder verzweigte gesättigte Alkylgruppe mit 1 bis 25 C-Atomen bedeutet und $R_2$ eine geradkettige oder verzweigte gesättigte oder ungesättigte Alkylgruppe mit 1 bis 25 C-Atomen,
$R_3'$ ein Halogenatom oder die Gruppe $-N^{\oplus}X_1X_2X_3$ bedeutet,
$X_1$, $X_2$ und $X_3$ gleich oder verschieden sind und Wasserstoff oder eine geradkettige oder verzweigte Alkylgruppe mit 1 bis 6 C-Atomen, und vorzugsweise Wasserstoff oder Methyl bedeuten,
Y eine ganze Zahl von 2 bis 12, vorzugsweise von 2 bis 6, ist,
$X^{\oplus}$ ein Äquivalent eines ein- oder zweiwertigen Kations bedeutet, wobei
n 1 ist, wenn $R'_3$ ein Halogenatom bedeutet und n = 0 ist, wenn $R'_3$ die Gruppe $-N^{\oplus}X_1X_2X_3$ bedeutet,

ist dadurch gekennzeichnet, daß man eine Verbindung der Formel I mit einem Säureanhydrid $(R_2CO)_2O$ acyliert und das Reaktionsprodukt gegebenenfalls mit einer Verbindung $NX_1X_2X_3$ umsetzt.

Die Reste $R_1$ und $R_2$ sind vorzugsweise verschieden und leiten sich insbesondere von einer natürlichen Fettsäure, wie z. B. Stearin-, Palmitin-, Myristin-, Caprin-, Öl-, Linol-, Linolen-, Arachin- oder Arachidonsäure ab.

Ein Halogenatom $R_3$ bzw. $R_3'$ ist ein Fluor-, Chlor- oder Jodatom, insbesondere aber ein Bromatom.

Eine geradkettige oder verzweigte Alkylgruppe $X_1$, $X_2$ oder $X_3$ mit 1 bis 6 C-Atomen ist z. B. Äthyl, Propyl, Isopropyl, Butyl, Isobutyl, Hexyl usw., und insbesondere die Methylgruppe.

Die Bedingungen der enzymatischen Hydrolyse (Reaktionsmedium, pH-Wert, Temperatur, Substratkonzentration) entsprechen den bei solchen Umsetzungen üblichen Bedingungen und sind substratspezifisch zu wählen, z. B. wie bei H. van den Bosch und L. L. M. van Deenen (Biochim. Biophys. Acta 106, 1965, 326). Als besonders vorteilhaft haben sich ein pH-Wert zwischen 7,0 und 7,5 und eine Temperatur von 35 ± 15°C erwiesen, insbesondere die Phasenumwandlungstemperatur $T_t$ ± 10°C des Substrats.

Die Bedingungen der katalytischen Hydrogenolyse des Benzylrestes entsprechen unter Berücksichtigung der übrigen Struktur des Moleküls den üblichen Bedingungen. Insbesondere führt man die Hydrogenolyse in einem inerten Lösungsmittel, wie z. B. Äthanol, in Gegenwart eines Palldaium- oder Pt/Pd-Katalysators durch, vorzugsweise bei Raumtemperatur und unter Normaldruck (vgl. H. Eibl et al., Liebigs Ann. Chemie 738, 1970, 161).

Die Acylierung der Verbindungen der Formel I durch Umsetzung mit einem Anhydrid der Formel $(R_2CO)_2O$ erfolgt, insbesondere zur Erzielung hoher Ausbeuten, vorteilhafterweise in Gegenwart von Perchlorsäure, wobei vorzugsweise mit einem ca. 10%igen Überschuß an Anhydrid gearbeitet wird. Die Reaktionsbedingungen können dabei entsprechend der bekannten Acylierung von Acyl- oder

Diacylglycerin gewählt werden (vgl. F. H. Mattson et. al., J. Lipid Res. 5, 1964, 374). Es ist aber auch möglich, nach an sich bekannten anderen Acylierungsmethoden, wie von Gupta et. al. (Proc. Nat. Acad. Sci. USA 74, 1977, 4315) beschrieben, zu arbeiten.

Wenn $R_2$ den Rest einer ungesättigten, insbesondere mehrfach ungesättigten Säure bedeutet, wird die Acylierung vorteilhafterweise unter Ausschluß von Sauerstoff, also z. B. im Vakuum, oder insbesondere in einer Inertgasatmosphäre, wie z. B. unter Stickstoff, durchgeführt.

Die Aminierung der Verbindungen der Formel I, worin $R_3$ ein Halogenatom vorzugsweise Brom bedeutet, durch Umsetzung mit einem Amin $NX_1X_2X_3$ erfolgt in an sich bekannter Weise (vgl. H. Eibl und A. Nicksch, Chem. Phys. Lipids 22, 1978, 1; W. Diembeck und H. Eibl, Chem. Phys. Lipids 24, 1979, 237).

Die Ausgangsverbindungen der Formel II können aus den entsprechenden 1,2-substituierten sn-Glycerinverbindungen erhalten werden, z. B. durch Umsetzung mit Halogenalkylphosphorsäuredichlorid (vgl. Hirt und Berchthold, Pharm. Acta Helv. 33, 1958, 349) oder vorzugsweise durch Umsetzung mit $POCl_3$ in Gegenwart von Triäthylamin und nachfolgende Umsetzung des erhaltenen Glycerin-3-phosphorsäuredichlorides mit dem entsprechenden Halogenalkanol (H. Eibl, Proc. Nat. Acad. Sci. USA 75, 1978, 4074; H. Eibl und A. Nicksch, Chem. Phys. Lipids 22, 1978, 1; W. Diembeck und H. Eibl, Chem. Phys. Lipids 24, 1979, 237).

Die Säureanhydride der Formel $(R_2CO)_2O$ wurden aus den entsprechenden Fettsäuren und Acetanhydrid hergestellt (D. Holde und K. Rietz, Ber. 57, 1924, 99).

Wenn man von den erfindungsgemäßen Zwischenprodukten der Formel I ausgeht, werden die bekannten Nachteile der Synthese von Glycerinphosphatiden, insbesondere die Wanderung der Acylreste und/oder des Phosphorsäurerestes, vermieden. Es hat sich gezeigt, daß die Halogenalkylester eines sn-Glycerinphosphorsäure der Formel I sehr gute Ausgangsmaterialien zur Herstellung von Glycerinphosphatiden sind:

Zur Herstellung der Zwischenprodukte der allgemeinen Formel I geht man von den Verbindungen der allgemeinen Formel II aus: Es wurde gefunden, daß die Verbindungen der Formel II, in denen R und R' Acylreste sind, im allgemeinen hervorragende Substrate für Phospholipase $A_2$ sind. Dadurch wird es möglich, durch enzymatische Hydrolyse aus den Verbindungen II die Verbindungen der Formel I zu erhalten, ohne daß eine Wanderung der übrigen Reste eintritt. Es wurde weiterhin gefunden, daß das gleiche Resultat auch erreicht wird, wenn man von Verbindungen II ausgeht, in denen R' eine Benzylgruppe ist, und diesen Rest durch katalytische Hydrogenolyse entfernt. Welcher Verfahrensschritt eingeschlagen wird, richtet sich vor allem nach der Konstitution und Zugänglichkeit der Ausgangsmaterialien II; im allgemeinen wird die enzymatische Hydrolyse mit Phospholipase $A_2$ die bevorzugte Maßnahme bei der Herstellung der Phospholipide der Formel I sein.

Zur Weiterverarbeitung der Zwischenprodukte der Formel I zu den Verbindungen der Formel III, werden die Verbindungen I mit einem Anhydrid $(R_2CO)_2O$ acyliert. Dabei werden, insbesondere hinsichtlich der Ausbeute, besonders gute Ergebnisse erhalten, wenn man die Acylierung in Gegenwart von Perchlorsäure durchführt. Auch für diesen Schritt hat sich überraschenderweise gezeigt, daß gerade Verbindungen der Formel I besonders gute Ausgangsmaterialien zur Herstellung von Glycerinphosphatiden, insbesondere Lecithinen oder Kephalinen, sind: Acyliert man ein 1-Acyl-sn-glycerin-3-phosphocholin in Gegenwart von Perchlorsäure, so führt dies zu einer nur sehr unvollständigen Umsetzung und zur Bildung von unerwünschten Nebenprodukten; die Ausbeute an gewünschtem Diacylderivat ist dementsprechend sehr gering. Acyliert man hingegen in der gleichen Weise die Verbindungen der Formel I, so erhält man mit sehr guten Ausbeuten und praktisch ohne Bildung von unerwünschten Nebenprodukten die gewünschten Diacylderivate, die dann in an sich bekannter Weise durch Umsetzung mit einem entsprechenden Aminoalkohol, z. B. Cholin, in das Phosphatid überführt werden können.

Zusammenfassend kann festgestellt werden, daß die Zwischenprodukte der Formel I eine selektive, einfache und wirtschaftliche Methode zur Herstellung von Glycerinphosphatiden ermöglichen, die vor allem für die stellungsspezifische Darstellung (Reinheit > 98%) von Glycerinphosphatiden mit zwei verschiedenen Acylresten von Bedeutung ist. Die Ausbeuten sind für jeden Verfahrensschritt sehr gut; so beträgt z. B. die Gesamtausbeute ausgehend von 1,2-substituierten sn-Glycerinverbindungen (Vorstufe der Ausgangsverbindungen II) 60 bis 65% d. Th.

Die nachfolgenden Beispiele sollen die Erfindung näher erläutern.

Die Rohprodukte der Aminierungen (Formel III, $R_3 = N^{\oplus}X_1X_2X_3$) wurden durch Säulenchromatographie gereinigt (Kieselgel 60, 0,2 bis 0,5 mm, der Fa. Merck, Darmstadt; Elutionsmittel Chloroform/Methanol/25%ig wäßriges Ammoniak im Volumenverhältnis 200/15/1 bis 65/30/3).

Das molare Verhältnis von P/Acyl/vicinales Diol wurde nach der Methode von Eibl und Lands (Biochemistry 9 1970, 423) ermittelt. Phosphat wurde nach der Methode von Eibl und Lands (Anal. Biochem. 30 1969, 51), vicinales Diol durch Perjodatanalyse nach Eibl und Lands (Anal. Biochem. 33 1970, 58) bestimmt.

## Beispiele

### 1,2-Dipalmitoyl-sn-glycerin-3-phosphorsäure-bromäthylester

Phosphoroxychlorid (4,5 g, 0,03 Mol) wurde unter Rühren in einem Wasserbad auf 5° C gekühlt. Nach Zugabe von Triäthylamin (3 g, 0,03 Mol) in 30 ml Tetrahydrofuran wurde das Rühren fortgesetzt und während einer Zeit von 30 Minuten eine Lösung von 1,2-Dipalmitoyl-sn-glycerin (11,4 g, 0,02 Mol) in 70 ml Tetrahydrofuran tropfenweise zugegeben. Durch Dünnschichtchromatographie wurde die Beendigung der Reaktion, d. h. vollständige Überführung in das Phosphorsäuredichlorid, festgestellt. Die Reaktionsmischung wurde 30 Minuten bei 20° C belassen und dann das ausgefallene Triäthylaminhydrochlorid abgesaugt. Nach der Zugabe von 25 ml Toluol wurden die Lösungsmittel abgedampft. Der ölige Rückstand wurde in 40 ml Tetrahydrofuran bei 20° C gelöst. Unter Rühren wurde eine Lösung von Triäthylamin (5 g, 0,05 Mol) in 20 ml Tetrahydrofuran zugegeben, danach tropfenweise eine Lösung von Bromäthanol (3 g, 0,022 Mol) in 60 ml Tetrahydrofuran. Es wurde am Wasserbad auf 40° C erhitzt und der Fortgang der Reaktion mittels Dünnschichtchromatographie verfolgt. Nach 60 min war die Reaktion beendet, und die Reaktionsmischung wurde auf 5° C abgekühlt. Das Phosphormonochlorid wurde mit 40 ml 4 m Ameisensäure hydrolysiert. Nach 30 min war die Hydrolyse beendet, und Wasser wurde zur Reaktionsmischung zugesetzt und mit 60 ml Hexan extrahiert. Zur oberen Phase, die das Reaktionsprodukt enthielt, wurden 30 ml Toluol zugegeben und dann zur Trockene verdampft. Der Rückstand wurde in 100 ml Diisopropyläther gelöst und mit einer 0,5 molaren Natriumcarbonatlösung (100 ml) ausgeschüttelt; zur besseren Phasentrennung wurden 100 ml Methanol zugegeben. Die obere Phase enthielt den 1.2-Dipalmitoyl-sn-glycerin-3-phosphorsäure-bromäthylester. Nach der Zugabe von 300 ml Aceton wurde der weiße Niederschlag abgetrennt und für die Hydrolyse mit Phospholipase $A_2$ eingesetzt.

Ausbeute an rohem 1,2-Dipalmitoyl-sn-glycerin-3-phosphorsäure-bromäthylester (als Natriumsalz): 13,7 g (86% d. Th. bezogen auf 1,2-Dipalmitoyl-sn-glycerin). Zur Elementaranalyse wurde eine kleine Menge des erhaltenen Produktes durch Chromatographie gereinigt.

$C_{37}H_{71}BrNaO_8P \cdot 1\ H_2O$ (Mol-Gew.-: 795,87):

| | | | | |
|---|---|---|---|---|
| Berechnet: | C 55,84 | H 9,25 | Br 10,04 | P 3,89 |
| Gefunden: | C 55,69 | H 9,11 | Br 9,54 | P 3,87 |

### 1-Palmitoyl-sn-glycerin-3-phosphorsäure-bromäthylester

1,2-Dipalmitoyl-sn-glycerin-3-phosphorsäure-bromäthylester (8,0 g, 0,01 Mol) wurde in einer Mischung aus 300 ml Diäthyläther und 300 ml destilliertem Wasser, welches $CaCl_2 \cdot 2\ H_2O$ (2,3 g, 0,016 Mol) enthielt. Es wurden Palitzsch-Puffer A (S. Palitzsch, Biochem. Z. 70 1915, 333), 285 ml, und Palitzsch-Puffer B, 15 ml, zugegeben, wodurch ein pH-Wert der resultierenden Emulsion von 7,5 erhalten wurde. 10 ml Phospholipase $A_2$ (aus Schweine-Pankreas; bezogen von der Fa. Böhringer, Mannheim) wurden zugegeben und die Mischung ca. 60 min bei 35° C gerührt. Nach dieser Zeit war das Ausgangsmaterial vollständig in 1-Palmitoyl-sn-glycerin-3-phosphorsäure-bromäthylester und Fettsäure übergeführt. Die Reaktionsmischung trennte sich in zwei Phasen auf. Die obere Phase, die das Reaktionsprodukt enthielt (durch Dünnschichtchromatographie festgestellt), wurde mit 100 ml Toluol versetzt und zur Trockene eingedampft. Nach Zugabe von 100 ml Aceton bildete der Rückstand weiße Kristalle. Sie wurden abgesaugt und mit 20 ml Aceton nachgewaschen. Das Filtrat enthielt die Fettsäure; der Niederschlag war dünnschichtchromatographisch rein. Die Ausbeute an 1-Palmitoyl-sn-glycerin-3-phosphorsäure-bromäthylester betrug 5,5 g (93% d. Th. bezogen auf das Vorprodukt).

### 1-Palmitoyl-2-oleoyl-sn-glycerin-3-phosphorsäure-bromäthylester

1-Palmitoyl-sn-glycerin-3-phosphorsäure-bromäthylester (2,6 g, 5 mMol) wurde in einer Mischung aus 5 ml Chloroform, 6 ml Methanol und 5 ml 4 molarer Ameisensäure gelöst, um die freie Säure zu erhalten. Die untere Phase enthielt das Produkt und wurde mit 3 ml Toluol verdünnt. Die Lösungsmittel wurden abgedampft und der Rückstand in 40 ml Trichloräthylen gelöst, und danach Ölsäureanhydrid (3 g, 5,5 mMol) zugegeben. Die sorgfältig gerührte Lösung wurde mit 0,15 ml 70%iger wäßriger Perchlorsäure vermischt. Die Acylierung war nach 30 sec beendet (dünnschichtchromatographischer Nachweis), und die Reaktionsmischung wurde durch Zugabe von 1 g Natriumhydrogencarbonat neutralisiert. Die Trichloräthylen-Phase wurde mit 10 ml Toluol gemischt und zur Trockene eingedampft. Der Rückstand wurde in 30 ml Hexan/Diisopropyläther (im Volumenverhältnis 9/1) und an Kieselgel (100 g, 0,2 bis 0,5 mm, bezogen von der Fa. Merck in Darmstadt) gereinigt. Die Fettsäuren wurden durch Elution mit Diisopropyläther entfernt und das Reaktionsprodukt mit Chloroform/Methanol/Wasser (im Volumenverhältnis 65/30/3) eluiert. Ausbeute an 1-Palmitoyl-2-oleoyl-sn-glycerin-3-phoshorsäure-bromäthylester 3,4 g (83% d. Th. bezogen auf das Vorprodukt).

Aminierung von 1-Palmitoyl-2-oleoyl-sn-glycerin-3-phosphorsäure-bromäthylester

Die Aminierung mit Verbindungen der Formel $NX_1X_2X_3$ wurde nach der Methode von W. Diembeck und H. Eibl (Chem. Phys. Lipids 24 1979, 237) durchgeführt. Die Ausbeuten der reinen Produkte betrugen 90 bis 95%, bezogen auf den Bromalkylester. Die analytischen Daten der synthetisierten Phospholipide finden sich in Tabelle 1 (Verbindungen 1 und 2).

Ersetzt man in den obigen Beispielen das Bromäthanol (y=2) durch ein anderes Halogenalkanol und das Ölsäureanhydrid durch ein anderes Fettsäureanhydrid, so werden in analoger Weise die Verbindungen 3 bis 10 der Tabelle 1 erhalten.

Tabelle 1

| Nr. | Fettsäurerest in 1-Stellung in 2-Stellung | y | Amin | Formel (Mol-Gew.) | C berechnet gefunden | H | N | P |
|---|---|---|---|---|---|---|---|---|
| 1 | Palmitin<br>Öl | 2 | $N(CH_3)_3$ | $C_{42}H_{84}NO_9P$<br>(778,08) | 64,83<br>64,11 | 10,88<br>10,79 | 1,80<br>1,69 | 3,98<br>3,82 |
| 2 | Palmitin<br>Öl | 2 | $NH_3$ | $C_{46}H_{92}NO_9P$<br>(717,98) | 66,23<br>64,86 | 11,12<br>10,61 | 1,68<br>2,01 | 3,71<br>4,20 |
| 3 | Palmitin<br>Öl | 6 | $N(CH_3)_3$ | ($C_{46}H_{92}NO_9P$<br>(834,23) | 66,23<br>65,98 | 11,12<br>11,01 | 1,68<br>1,72 | 3,71<br>3,68 |
| 4 | Palmitin<br>Öl | 6 | $NH_3$ | $C_{43}H_{84}NO_8P$<br>(774,13) | 66,72<br>66,51 | 10,94<br>10,83 | 1,81<br>1,85 | 4,00<br>3,89 |
| 5 | Palmitin<br>Laurin | 2 | $N(CH_3)_3$ | $C_{36}H_{74}NO_9P$<br>(695,94) | 62,13<br>61,94 | 10,72<br>10,69 | 2,01<br>2,04 | 4,45<br>4,21 |
| 6 | Palmitin<br>Laurin | 2 | $NH(CH_3)_2$ | $C_{35}H_{70}NO_8P$<br>(687,91) | 63,32<br>63,21 | 10,63<br>10,56 | 2,11<br>2,21 | 4,66<br>4,73 |
| 7 | Palmitin<br>Laurin | 2 | $NH_2(CH_3)$ | $C_{34}H_{68}NO_8P$<br>(661,88) | 62,83<br>62,47 | 10,55<br>10,41 | 2,16<br>2,04 | 4,77<br>4,53 |
| 8 | Palmitin<br>Laurin | 2 | $NH_3$ | $C_{33}H_{66}NO_8P$<br>(635,84) | 62,33<br>61,85 | 10,46<br>10,29 | 2,20<br>2,02 | 4,87<br>4,71 |
| 9 | Palmitin<br>Arachin | 2 | $N(CH_3)_3$ | $C_{44}H_{90}NO_9P$<br>(808,19) | 64,39<br>65,05 | 11,23<br>11,07 | 1,73<br>1,64 | 3,83<br>3,91 |
| 10 | Palmitin<br>Arachin | 2 | $NH_3$ | $C_{41}H_{82}NO_8P$<br>(748,09) | 65,83<br>65,64 | 11,05<br>10,96 | 1,87<br>1,72 | 4,14<br>4,07 |

**Patentansprüche für die Vertragsstaaten: BE, CH, DE, FR, GB, IT, LI, NL, SE**

1. Glycerin-3-phosphorsäurehalogenalkylester der allgemeinen Formel I

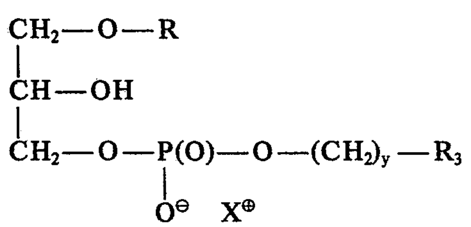

(I)

worin

R den Rest $R_1$ oder einen Acylrest $-COR_1$ bedeutet,
$R_1$ eine geradkettige oder verzweigte, gesättigte Alkylgruppe mit 1 bis 25 C-Atomen bedeutet,
$R_3$ ein Halogenatom ist,
y eine ganze Zahl von 2 bis 12 ist, und
$X^{\oplus}$ ein Äquivalent eines ein- oder zweiwertigen Kations bedeutet.

2. Verbindungen der Formel I nach Anspruch 1, dadurch gekennzeichnet, daß R den Rest einer natürlichen Fettsäure darstellt.

3. Verfahren zur Herstellung von Glycerin-3-phosphorsäurehalogenalkylestern der Formel I nach Anspruch 1 oder 2, dadurch gekennzeichnet, daß man von einer Verbindung der Formel II ausgeht,

$$\begin{array}{l} CH_2-O-R \\ | \\ CH-OR' \\ | \\ CH_2-O-\underset{\begin{array}{c}|\\ O^{\ominus}\end{array}}{P(O)}-O-(CH_2)_y-R_3 \\ \qquad\qquad\quad X^{\oplus} \end{array} \qquad (II)$$

worin

R, $R_3$, y und $X^{\oplus}$ die gleiche Bedeutung wie in Formel I besitzen,
R' einen Acylrest $-COR_2'$ oder den Benzylrest und
$R_2'$ eine geradkettige oder verzweigte, gesättigte oder ungesättigte Alkylgruppe mit 1 bis 25 C-Atomen bedeuten

und a), wenn R' einen Acylrest darstellt, diesen Acylrest in Gegenwart von Phospholipase $A_2$ hydrolysiert, oder b), wenn R' den Benzylrest bedeutet, diesen durch katalytische Hydrogenolyse entfernt.

4. Verfahren nach Anspruch 3, dadurch gekennzeichnet, daß man die enzymatische Hydrolyse mit Phospholipase $A_2$ bei einem pH-Wert von 7,0 bis 7,5 durchführt.

5. Verfahren nach Anspruch 3 oder 4, dadurch gekennzeichnet, daß man die enzymatische Hydrolyse mit Phospholipase $A_2$ bei einer Temperatur von $35 \pm 15°$ C durchführt.

6. Verfahren nach einem der Ansprüche 3 bis 5, dadurch gekennzeichnet, daß man die enzymatische Hydrolyse mit Phospholipase $A_2$ bei der Phasenumwandlungstemperatur $T_t \pm 10°C$ des Substrats durchführt.

7. Verfahren zur Herstellung von Glycerin-3-phosphorsäurederivaten der Formel III

$$\begin{array}{l} CH_2-O-R \\ | \\ CH-O-COR_2 \\ | \\ CH_2-O-\underset{\begin{array}{c}|\\ O^{\ominus}\end{array}}{P(O)}-O-(CH_2)_y-R_3' \\ \qquad\qquad\quad (X^{\oplus})_n \end{array} \qquad (III)$$

worin

R den Rest $R_1$ oder einen Acylrest $-COR_1$
$R_1$ eine geradkettige oder verzweigte gesättigte Alkylgruppe mit 1 bis 25 C-Atomen bedeutet und
$R_2$ eine geradkettige oder verzweigte gesättigte oder ungesättigte Alkylgruppe mit 1 bis 25 C-Atomen bedeuten, wobei $R_1$ und $R_2$ gleich oder verschieden sind
$R_3'$ ein Halogenatom oder die Gruppe $-N^{\oplus}X_1X_2X_3$ bedeutet,
$X_1$, $X_2$ und $X_3$ gleich oder verschieden sind und Wasserstoff oder eine geradkettige oder verzweigte Alkylgruppe mit 1 bis 6 C-Atomen bedeuten,
y eine ganze Zahl von 2 bis 12 ist,
$X^{\oplus}$ ein Äquivalent eines ein- oder zweiwertigen Kations bedeutet, wobei
n 1 ist, wenn $R_3'$ ein Halogenatom bedeutet und wobei n = 0 ist, wenn $R_3'$ die Gruppe $-N^{\oplus}X_1X_2X_3$ bedeutet,

dadurch gekennzeichnet, daß man eine Verbindung der Formel I nach Anspruch 1 mit einem Säureanhydrid $(R_2CO)_2O$ acyliert und, das Reaktionsprodukt gegebenenfalls, mit einer Verbindung $NX_1X_2X_3$ umsetzt.

8. Verfahren nach Anspruch 7, dadurch gekennzeichnet, daß R und $R_2$ verschieden sind und den Rest einer natürlichen Fettsäure darstellen.

9. Verfahren nach Anspruch 7 oder 8, dadurch gekennzeichnet, daß man die Acylierung mit $(R_2CO)_2O$ in Gegenwart von Perchlorsäure durchführt.

10. Verfahren nach einem der Ansprüche 7 bis 9, dadurch gekennzeichnet, daß man bei der Acylierung einen 10%igen Überschuß an $(R_2CO)_2O$ verwendet.

11. Verfahren nach einem der Ansprüche 7 bis 10, dadurch gekennzeichnet, daß man, wenn $R_2$ den Rest einer ungesättigten Fettsäure bedeutet, die Acylierung unter Ausschluß von Sauerstoff durchführt.

**Patentansprüche für den Vertragsstaat: AT**

1. Verfahren zur Herstellung von Glycerin-3-phosphorsäurehalogenalkylester der allgemeinen Formel I

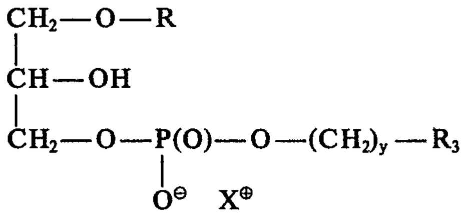

(I)

worin

R den Rest $R_1$ oder einen Acylrest $-COR_1$ bedeutet,
$R_1$ eine geradkettige oder verzweigte, gesättigte Alkylgruppe mit 1 bis 25 C-Atomen bedeutet,
$R_3$ ein Halogenatom ist,
y eine ganze Zahl von 2 bis 12 ist, und
$X^{\oplus}$ ein Äquivalent eines ein- oder zweiwertigen Kations bedeutet,

dadurch gekennzeichnet, daß man eine Verbindung der Formel II

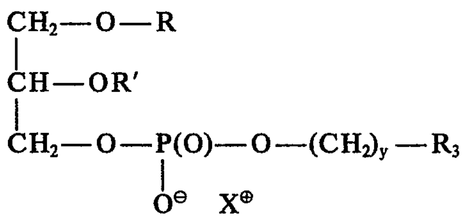

(II)

in welcher
R, $R_3$, y und $X^{\oplus}$ die gleiche Bedeutung wie in Formel I besitzen und
R′ einen Acylrest $-COR_2'$ bedeutet, worin $R_2'$ eine geradkettige oder verzweigte, gesättigte oder ungesättigte Alkylgruppe mit 1 bis 25 C-Atomen ist,

in Gegenwart von Phospholipase $A_2$ hydrolisiert, oder eine Verbindung der Formel II, worin

R′ den Benzylrest bedeutet und
$R_1$, $R_3$, y und $X^{\oplus}$ die obige Bedeutung haben,

katalytisch hydrogenolysiert.

2. Verfahren zur Herstellung von Glycerin-3-phosphorsäurederivaten der Formel III

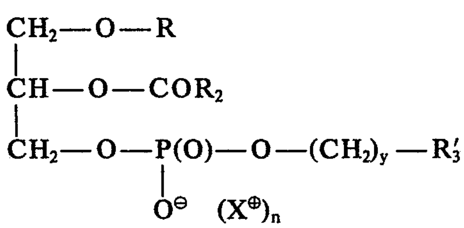

(III)

worin

R den Rest $R_1$ oder einen Acylrest $-COR_1$
$R_1$ eine geradkettige oder verzweigte gesättigte Alkylgruppe mit 1 bis 25 C-Atomen bedeutet und
$R_2$ eine geradkettige oder verzweigte gesättigte oder ungesättigte Alkylgruppe mit 1 bis 25 C-Atomen bedeuten, wobei $R_1$ und $R_2$ gleich oder verschieden sind
$R_3'$ ein Halogenatom oder die Gruppe $-N^{\oplus}X_1X_2X_3$ bedeutet,
$X_1$, $X_2$ und $X_3$ gleich oder verschieden sind und Wasserstoff oder eine geradkettige oder verzweigte Alkylgruppe mit 1 bis 6 C-Atomen bedeuten,
y eine ganze Zahl von 2 bis 12 ist,
$X^{\oplus}$ ein Äquivalent eines ein- oder zweiwertigen Kations bedeutet, wobei
n 1 ist, wenn $R_3'$ ein Halogenatom bedeutet und wobei n = 0 ist, wenn $R_3'$ die Gruppe $N^{\oplus}X_1X_2X_3$

bedeutet,

dadurch gekennzeichnet, daß man eine Verbindung der Formel I nach Anspruch 1 mit einem Säureanhydrid $(R_2CO)_2O$ acyliert und, das Reaktionsprodukt gegebenenfalls, mit einer Verbindung $NX_1X_2X_3$ umsetzt.

**Claims for the Contracting states: BE, CH, DE, FR, GB, IT, NL, SE, LI**

1. Glycerol-3-phosphoric acid haloalkyl esters of the general formula I

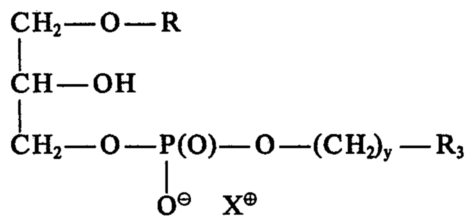

(I)

wherein R signifies the radical $R_1$ or an acyl radical $-COR_1$, $R_1$ signifies a straight-chained or branched, saturated alkyl group with 1 to 25 C-atoms, $R_3$ is a halogen atom, y is a whole number of from 2 to 12 and $X^{\oplus}$ is one equivalent of a mono- or divalent cation.

2. Compounds of formula I according to claim 1, characterised in that R represents the radical of a natural fatty acid.

3. Process for the preparation of glycerol-3-phosphoric acid haloalkyl esters of formula I according to claim 1 or 2, characterised in that one starts from a compound of formula II

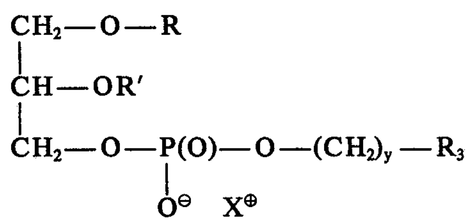

(II)

wherein R, $R_3$, y and $X^{\oplus}$ possess the same meaning as in formula I, R′ signifies an acyl radical $-COR_2'$ or the benzyl radical and $R_2'$ signifies a straightchained or branched, saturated or unsaturated alkyl group with 1 to 25 C-atoms and a) when R′ represents an acyl radical, this acyl radical is hydrolysed in the presence of phospholipase $A_2$ or b) when R′ signifies a benzyl radical, this is removed by catalytic hydrogenolysis.

4. Process according to claim 3, characterised in that one carries out the enzymatic hydrolysis with phospholipase $A_2$ at a pH value of 7.0 to 7.5.

5. Process according to claim 3 or 4, characterised in that one carries out the enzymatic hydrolysis with phospholipase $A_2$ at a temperature of $35 \pm 15°C$.

6. Process according to one of claims 3 to 5, characterised in that one carries out the enzymatic hydrolysis with phospholipase $A_2$ at the phase transformation temperature $T_t \pm 10°C$ of the substrate.

7. Process for the preparation of glycerol-3-phosphoric acid derivatives of formula III

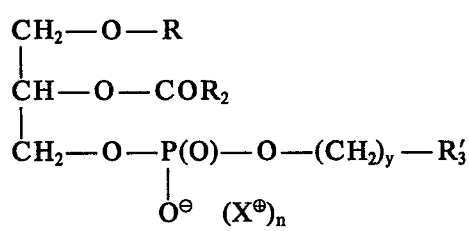

(III)

wherein R signifies the radical $R_1$ or an acyl radical $-COR_1$, $R_1$ signifies a straight-chained or branched, saturated alkyl group with 1 to 25 C-atoms and $R_2$ a straight-chained or branched, saturated or unsaturated alkyl group with 1 to 25 C-atoms, whereby $R_1$ and $R_2$ are the same or different, $R_3'$ signifies a halogen atom or the group $-N^{\oplus}X_1X_2X_3$, $X_1$, $X_2$ and $X_3$ are the same or different and signify hydrogen or a straight-chained or branched alkyl group with 1 to 6 C-atoms, y is a whole number of from 2 to 12, $X^{\oplus}$ signifies one equivalent of a mono- or divalent cation, whereby n is 1 when $R_3'$ signifies a halogen atom and whereby n = 0 when $R_3'$ signifies the group $-N^{\oplus}X_1X_2X_3$, characterised in that one acylates a compound of the formula I according to claim 1 with an acid anhydride $(R_2CO)_2O$ and possibly reacts the reaction product with a compound $NX_1X_2X_3$.

8. Process according to claim 7, characterised in that R and $R_2$ are different and represent the residue of a natural fatty acid.

9. Process according to claim 7 or 8, characterised in that one carries out the acylation with $(R_2CO)_2O$ in the presence of perchloric acid.

10. Process according to one of claims 7 to 9, characterised in that in the case of the acylation one uses a 10% excess of $(R_2CO)_2O$.

11. Process according to one of claims 7 to 10, characterised in that when $R_2$ signifies the residue of an unsaturated fatty acid, one carries out the acylation with the exclusion of oxygen.

**Claims for the Contracting state: AT**

1. Process for the preparation of glycerol-3-phosphoric acid haloalkyl esters of the general formula I

$$\begin{array}{l} CH_2{-}O{-}R \\ | \\ CH{-}OH \\ | \\ CH_2{-}O{-}P(O){-}O{-}(CH_2)_y{-}R_3 \\ \qquad\qquad | \\ \qquad\qquad O^{\ominus} \quad X^{\oplus} \end{array} \qquad (I)$$

wherein R signifies the residue $R_1$ or an acyl radical $-COR_1$, $R_1$ signifies a straight-chained or branched, saturated alkyl group with 1 to 25 C-atoms, $R_3$ is a halogen atom, y is a whole number of from 2 to 12 and $X^{\oplus}$ signifies one equivalent of a mono- or divalent cation,

characterised in that one hydrolyses a compound of the formula II

$$\begin{array}{l} CH_2{-}O{-}R \\ | \\ CH{-}OR' \\ | \\ CH_2{-}O{-}P(O){-}O{-}(CH_2)_y{-}R_3 \\ \qquad\qquad | \\ \qquad\qquad O^{\ominus} \quad X^{\oplus} \end{array} \qquad (II)$$

in which R, $R_3$, y and $X^{\oplus}$ possess the same meaning as in formula I and R′ signifies an acyl radical $-COR_2'$, wherein $R_2'$ is a straight-chained or branched, saturated or unsaturated alkyl group with 1 to 25 C-atoms, in the presence of phospholipase $A_2$, or catalytically hydrogenolyses a compound of formula II, wherein R′ signifies the benzyl radical and $R_1$, $R_3$, y and $X^{\oplus}$ have the above meaning.

2. Process for the preparation of glycerol-3-phosphoric acid derivatives of the formula III

$$\begin{array}{l} CH_2{-}O{-}R \\ | \\ CH{-}O{-}COR_2 \\ | \\ CH_2{-}O{-}P(O){-}O{-}(CH_2)_y{-}R_3' \\ \qquad\qquad | \\ \qquad\qquad O^{\ominus} \quad (X^{\oplus})_n \end{array} \qquad (III)$$

wherein R signifies the radical $R_1$ or an acyl radical $-COR_1$, $R_1$ signifies a straight-chained or branched saturated alkyl group with 1 to 25 C-atoms and $R_2$ a straight-chained or branched saturated or unsaturated alkyl group with 1 to 25 C-atoms, whereby $R_1$ and $R_2$ are the same or different, $R_3'$ signifies a halogen atom or the group $-N^{\oplus}X_1X_2X_3$, $X_1$, $X_2$ and $X_3$ are the same or different and signify hydrogen or a straightchained or branched alkyl group with 1 to 6 C-atoms, y is a whole number of from 2 to 12, $X^{\oplus}$ signifies one equivalent of a mono- or divalent cation, whereby n is 1 when $R_3'$ signifies a halogen atom and whereby n=0 when $R_3'$ signifies the group $N^{\oplus}X_1X_2X_3$, characterised in that one acylates a compound of the formula I according to claim 1 with an acid anhydride $(R_2CO)_2O$ and possibly reacts the reaction product with a compound $NX_1X_2X_3$.

**Revendications pour les Etats contractants: BE, CH, DE, FR, GB, IT, NL, SE, LI**

1. Ester halogénoalcoylique d'acide glycérine-3-phosphorique de formule générale I

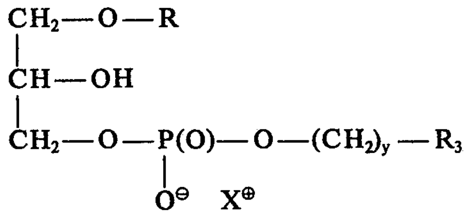

(I)

dans laquelle

R représente le reste $R_1$ ou un radical acyle $-COR_1$,
$R_1$ représente un groupe alcoyle saturé à chaîne droite ou ramifiée en C1—C25,
$R_3$ représente un atome d'halogène,
y est un nombre entier de 2 à 12, et
$X^{\oplus}$ représente un équivalent d'un cation mono- ou divalent.

2. Composés de formule I selon la revendication 1, caractérisés en ce que R représente le reste d'un acide gras naturel.

3. Procédé de préparation des esters halogénoalcoyliques d'acides glycérine-3-phosphoriques de formule I selon la revendication 1 ou 2, caractérisé en ce que l'on part d'un composé de formule II

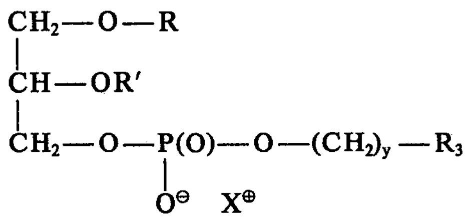

(II)

dans laquelle

R, $R_3$, y et $X^{\oplus}$ ont les significations indiquées en référence à la formule I,
R' représente un radical acyle $-COR_2'$ ou le radical benzyle, et
$R_2'$ représente un groupe alcoyle saturé ou insaturé à chaîne droite ou ramifiée en C 1—C 25,

et a) lorsque R' représente un radical acyle, on hydrolyse ce radical acyle en présence de phospholipase $A_2$ ou bien b) lorsque R' représente le radical benzyle, on élimine ce radical par hydrogénolyse catalytique.

4. Procédé selon la revendication 3, caractérisé en ce que l'hydrolyse enzymatique par la phospholipase $A_2$ est effectuée à un pH de 7,0 à 7,5.

5. Procédé selon la revendication 3 ou 4, caractérisé en ce que l'hydrolyse enzymatique par la phospholipase $A_2$ est effectuée à une température de 35 ± 15° C.

6. Procédé selon l'une des revendications 3 à 5, caractérisé en ce que l'hydrolyse enzymatique par la phospholipase $A_2$ est effectuée à la température de transition de phase $T_t$ ± 10° C du substrat.

7. Procédé de préparation des dérivés d'acides glycérine-3-phosphoriques de formule III

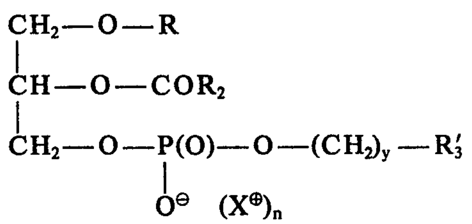

(III)

dans laquelle

R représente le reste $R_1$ ou un radical acyle $-COR_1$,
$R_1$ et $R_2$ ont des significations identiques ou différentes, $R_1$ représentant un groupe alcoyle saturé à chaîne droite ou ramifiée en C 1—C 25 et $R_2$ un groupe alcoyle saturé ou insaturé à chaîne droite ou ramifiée en C 1—C 25,
$R_3'$ représente un atome d'halogène ou le groupe $-N^{\oplus}X_1X_2X_3$,
$X_1$, $X_2$ et $X_3$ ayant des significations identiques ou différentes, représentent l'hydrogène ou un groupe alcoyle droit ou ramifiée en C 1—C 6,
y est un nombre entier de 2 à 12,
$X^{\oplus}$ représente un équivalent d'un cation mono- ou di-valent,

n est égal à I lorsque $R_3'$ représente un atome d'halogène et n est égal à O lorsque $R_3'$ représente le groupe $-N^{\oplus}X_1X_2X_3$,

caractérisé en ce que l'on acyle un composé de formule I selon la revendication 1 par un anhydride d'acide $(R_2CO)_2O$ et le cas échéant, on fait réagir le produit réactionnel avec un composé $NX_1X_2X_3$.

8. Procédé selon la revendication 7, caractérisé en ce que R et $R_2$ sont différents et représentent le radical d'un acide gras naturel.

9. Procédé selon la revendication 7 ou 8, caractérisé en ce que l'acylation par $(R_2CO)_2O$ est effectuée en présence d'acide perchlorique.

10. Procédé selon l'une des revendications 7 à 9, caractérisé en ce que l'on utilise à l'acylation un excès de 10% de $(R_2CO)_2O$.

11. Procédé selon l'une des revendications 7 à 10, caractérisé en ce que, lorsque $R_2$ représente le reste d'un acide gras insaturé, on effectue l'acylation à l'abri de l'oxygène.

**Revendications pour l'Etat contractant: AT**

1. Procédé de préparation d'ester halogénoalcoylique d'acide glydérine-3-phosphorique de formule générale I

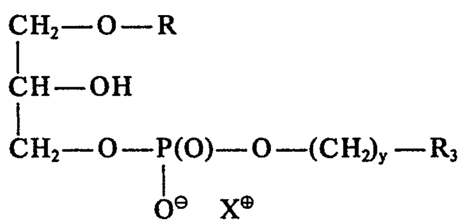

(I)

dans laquelle

R représente le reste $R_1$ ou un radical acyle $-COR_1$,
$R_1$ représente un groupe alcoyle saturé à chaîne droite ou ramifiée en C 1—C 25,
$R_3$ représente un atome d'halogène,
y est un nombre entier de 2 à 12, et
$X^{\oplus}$ représente un équivalent d'un cation mono- ou divalent,

caractérisé en ce que l'on hydrolyse un composé de formule II

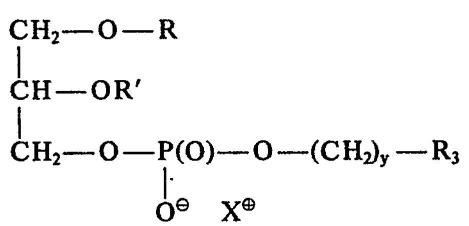

(II)

dans laquelle

R, $R_3$, y et $X^{\oplus}$ ont les significations indiquées en référence à la formule 1, et
R' représente un radical acyle $-COR'_2$ dans lequel $R'_2$ représente un groupe alcoyle saturé ou insaturé à chaîne droite ou ramifiée en C1—C25,

en présence de phospholipase $A_2$, ou bien on soumet un composé de formule II dans laquelle

R' représente le radical benzyle, et
$R_1$, $R_3$, y et $X^{\oplus}$ ont les significations indiquées ci-dessus, à hydrogénolyse catalytique.

2. Procédé de préparation des dérivés d'acide glycérine-3-phosphorique de formule III

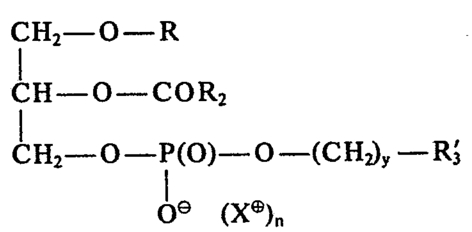

(III)

dans laquelle

R représente le reste $R_1$ ou un radical acyle $-COR_1$,

$R_1$ et $R_2$ ont des significations identiques ou différentes $R_1$ représentant un groupe alcoyle saturé à chaîne droite ou ramifiée en C1—C25 et $R_2$ un groupe alcoyle saturé ou insaturé à chaîne droite ou ramifiée en C1—C25,

$R'_3$ représente un atome d'halogène ou le groupe $-N^{\oplus}X_1X_2X_3$,

$X_1$, $X_2$ et $X_3$ ont des significations identiques ou différentes et représentent l'hydrogène ou un groupe alcoyle à chaîne droite ou ramifiée en C1—C6,

y est un nombre entier de 2 à 12,

$X^{\oplus}$ représente un équivalent d'un cation mono- ou divalent, et

n est égal à 1 lorsque $R'_3$ représente un atome d'halogène et n est égal à 0 lorsque $R'_3$ représente le groupe $N^{\oplus}X_1X_2X_3$,

caractérisé en ce que l'on acyle un composé de formule I selon la revendication 1 par un anhydride d'acide $(R_2CO)_2O$ et le cas échéant, on fait réagir le produit réactionnel avec un composé $NX_1X_2X_3$.